# EUROPEAN PATENT APPLICATION

(11) **EP 1 643 220 A1**
(43) Date of publication of application: **05.04.2006**
(21) Application number: 05256109.9
(22) Date of filing: 29.09.2005
(51) Int. Cl.: G01F 11/24, G01F 11/46

(54) **Apparatus for dispensing measured quantities of powder**

(30) Priority: 30.09.2004 US 955718
(71) Applicant: McNeil-PPC, Inc., Skillman, NJ 08558 (US)
(72) Inventor: Catani, Steven J., Athens, GA 30606 (US)
(74) Representative: Mercer, Christopher Paul

(57) **Abstract**

This invention is directed to an apparatus and method for dispensing precise, pre-calibrated amounts of powdered material, such as, a high intensity sweetener, a flavor, a nutritional supplement, a vitamin, a mineral, a food grade bulking material, or mixtures thereof, in a controlled manner into a food or beverage composition. The apparatus of this invention includes a container that is capable of holding the powdered material, and a series of adjacent plates located at the lower end of the container. Each plate has a plurality of openings therein, and at least one plate is rotatable in relation to the other plates. Rotation of the plate or plates between various positions enables the user to deliver a precisely controlled volume of powdered material into the food or beverage from the container.

## Description

### FIELD OF THE INVENTION

This invention is directed to an apparatus and method for dispensing precise, small calibrated amounts of powdered material, such as, a high intensity sweetener, in a controlled manner into a food or beverage composition. The apparatus of this invention includes a container that is capable of holding the powdered material, and a series of adjacent plates located at the lower end of the container. Each plate has a plurality of openings therein that define a precise volume based upon the size of the openings, the number of openings and the thickness of the plates, and at least one plate is rotatable in relation to the other plates. Rotation or movement of the plate or plates between various positions enables the user to deliver a precisely controlled volume of powdered material into the food or beverage from the container.

### BACKGROUND OF THE INVENTION

High intensity sweeteners are advantageously provided today for a variety of consumer uses directed to the sweetening of foods and beverages. The advantages of such high intensity sweeteners include the ability to sweeten with reduced calories, carbohydrates, and / or insulin response, the ability to sweeten without adding bulk, and the ability to sweeten with uniquely preferred tastes. Such high intensity sweeteners include sucrose derivatives such as those described in U.S. Patent No. 4,435,440, which may be up to 600 times more sweet than sucrose. Sucralose, one of the sweeteners disclosed herein is known for its sugar-like taste, being free of bitter elements, and its high stability in all applications. Many other intensity sweeteners are also available.

Typically, such high intensity sweeteners are provided for consumer use in a number of forms, such as, in granular or powdered form packaged in sachets, tubular packets, and other containers, liquid drops, and solid forms, such as, tablets. Typically for consumer use, a high intensity sweetener is diluted with a non-sweet or less-sweet diluent composition. For example, a teaspoon of sucrose weighs about 4 grams, whereas the equivalent amount (in terms of sweetness) of the sucrose derivative sucralose is about 0.007 grams. Obviously, when sucralose is in granular or powdered form, it would be very difficult to place such a small amount of sucralose into a package, such as, a sachet, in a consistent manner. It would also be very difficult for the end user or consumer to transfer the appropriate amount of sucralose from the package (e.g., sachet) to a food (e.g., cereal) or beverage (e.g., coffee or tea) that requires sweetening. Accordingly, a typical sachet containing sucralose also contains a carrier or diluent composition, such as, dextrose, to dilute the sucralose from about 20 to about100 fold. Other forms of sucralose designed for consumer use, such as tablets, granular forms, and liquids, are similarly diluted to permit effective use by the consumer.

There are problems, however, attendant with using a carrier or diluent composition with high intensity sweeteners. For example, the diluent adds to the weight and volume of the final product, thereby raising processing and shipping costs without adding any appreciable economic value to the final product. In addition, the diluent employed may be unacceptable to certain consumers. For example, food grade carbohydrate diluents, such as, dextrose and maltodextrin, are often unacceptable to consumers on restricted carbohydrate diets. Moreover, fiber-based diluents are often unacceptable to consumers subject to gastrointestinal distress. The use of liquid diluents has additional problems because liquid products containing high-intensity sweeteners may require single use packaging or preservatives to prevent microbial contamination, thereby making such liquid products unacceptable to consumers seeking to avoid the use of common preservatives.

Various devices capable of dispensing powdered materials have previously been disclosed. For example, U.S. Pat. No. 3,866,805 discloses a dispensing apparatus that is operated by rotating a portion of its cap to dispense a predetermined amount of coffee or other pulverulent material. However, the apparatus of U.S. Patent No. 3,866,805 does not disclose the use of dispensing volumes in the range of from about 1 - about 100 mg, the applicable range dispensing a high intensity sweetener. While coffee is normally used in gram quantities and errors in the 1 mg range would not cause a significant deterioration of the sensory experience, the same is not true for high intensity sweeteners, such as, sucralose. A dosing error as little as about 5% of the normal dose, or 0.35 milligrams (0.00035 grams), has an appreciable deterioration of the sensory experience.

In addition, U.S. Pat. No. 6,283,339 discloses a two-part dispenser for dispensing a pre-calibrated amount of powdered or granular product by twisting or rotating one part of the dispenser. Again, however, the apparatus of U.S. Pat. No. 6,283,339 does not disclose the use of dispensing volumes in low ranges, for example, about 1 mg, nor inherent inaccuracy in a powder dosing using a single or small number of dispensing steps. Moreover, the dispensing openings of the dispenser of U.S. Pat. No. 6,283,339 are located in the side wall of the dispenser. In contrast, in the apparatus of this invention the dispensing openings are located at the bottom face of the apparatus in the third plate. Location in the side wall of the container while advantageous in '339 would make directing very small quantities into or onto the food to be sweetened difficult.

In view of the foregoing, it would be desirable to avoid the above described disadvantages by having an apparatus for dispensing a small, precise amount of a high intensity sweetener in the range of about 2.3 to about 0.001 cubic centimeters in granular or powdered form directly upon or into a food or beverage in a controlled manner.

The invention provides such an apparatus. It is one feature of this invention that the apparatus may be employed to deliver high intensity sweetener in granular or powdered form without requiring a diluent or carrier. It is another feature of this invention that the apparatus employs a plurality of openings or small volumes within the plates, rather than a single opening or volume, to measure and deliver the batch amount of granulated or powdered material to be discharged from the apparatus. By employing such a plurality of openings or volumes, the error associated with discharging the desired amount of material from the apparatus is statistically reduced.

Accordingly, the apparatus of this invention is capable of delivering a small and precisely pre-calibrated volume of high intensity sweetener in a controlled and well-dispersed manner, which is particularly advantageous in applying a high intensity sweetener to solid foods such as cereal and the like. It is another object of this invention to provide a method of delivering a small, pre-calibrated volume of high intensity sweetener in a controlled manner to a food or beverage using such an apparatus. Other objects, features and advantages of this invention will be apparent to those skilled in the art in view of the detailed description of the invention provided hereinUnless specifically defined herein, all technical and scientific terms used herein have the same meaning as commonly understood by one of ordinary skill in the art to which this invention belongs. Although methods and materials similar or equivalent to those described herein can be used in the practice or manufacturing of the present invention, suitable methods and materials are described below. Any publications, patent applications, patents and other documents mentioned herein are incorporated by reference in their entirety. In case of conflict between any document mentioned herein and the instant specification, including definitions, the instant specification will control. In addition, the materials, methods, and examples provided herein are illustrative only and are not intended to be limiting.

Other features and advantages of the invention, e.g., individually rolled disposable absorbent article, will be apparent from the following description and from the claims.

Two features of the present inventionto provide precise and controlled dosing of an intense sweetener of the present invention. First, a plurality ofcalibrated openings, which are in sequence, are filled from the container in a first step and then discharged in a subsequence step. Second, an additional arrangement of the openings such that at no time are the holes or openings being filled are in alignment to the openings or holes being discharged.

### SUMMARY OF THE INVENTION

This invention is directed to an apparatus and method for dispensing precise, pre-calibrated amounts of powdered material, such as, a high intensity sweetener, in a controlled manner into a food or beverage composition.

In one embodiment, the apparatus of this invention comprises, consists of, and/or consisting essentially of:
(a) a container having a first end a second end, and an outside therebetween;
(b) a first plate that is mounted to the first end of the container, in which the first plate has a plurality of first plate openings therein, and the total volume of the sum of the first plate openings being in the range of about 2.3 to about 0.001 cubic centimeters;
(c) a second plate that is adjacent to and moveably mounted in relation to the first plate, in which the second plate has a plurality of second plate openings therein; and
(d) a third plate that is adjacent to and moveable mounted in relation to to the second plate, in which the third plate has a plurality of third plate openings therein the plurality of third plate openings being in permanent communication to the outside of the container,
wherein the second plate is moveable between at least two positions, (i) a first position in which at least one of the plurality of second plate openings is in registry with at least one of the plurality of the third plate openings and the plurality of second plate openings not being in registry with the any of the plurality of first plate openings, and (ii) a second position wherein at least one of the plurality of second plate openings being in registry with at least one of the plurality of first plate openings and the plurality of second plate openings not being in registry with at least one of the plurality of third plate openings.

A method of using the above-described apparatus comprises, consists of, and/or consists essentially of:
(a) providing an apparatus comprising:
   (i) a container having a first end a second end, and an outside therebetween;
   (ii) a first plate that is mounted to the first end of the container, in which the first plate has a plurality of first plate openings therein, and the total volume of the sum of the first plate openings being in the range of about 2.3 to about 0.001 cubic centimeters;
   (iii) a second plate that is adjacent to and moveably mounted in relation to the first plate, in which the second plate has a plurality of second plate openings therein; and
   (iv) a third plate that is adjacent to and moveable mounted in relation to the second plate, in which the third plate has a plurality of third plate openings therein the plurality of third plate openings being in permanent communication to the outside of the container,
   wherein the second plate is moveable between at least two positions, (i) a first position in which at least one of the plurality of second plate openings is in registry with at least one of the plurality of the third plate openings and the plurality of second plate openings not being in registry with the any of the plurality of first plate openings, and (ii) a second position wherein at least one of the plurality of second plate openings being in registry with at least one of the plurality of first plate openings and the plurality of second plate openings not being in registry with at least one of the plurality of third plate openings;
(b) providing the powdered material into the container when the second plate is in the first position to fill the openings in the first plate with the powdered material;
(c) moving the second plate to the second position to transfer the powdered material from the openings in the first plate to the openings in the second plate; and
(d) moving the second plate to the first position to transfer the powdered material from the openings in the second plate through the openings in the third plate to dispense the powdered material.

In another embodiment, the apparatus of this invention comprises, consists of and/or consists essentially of:
(a) a container having a first end and a second end;
(b) a first plate which is rotatably mounted to the first end of the container, in which the first plate has a plurality of openings therein, and the total volume of the sum of the openings of the first plate is in the range of about 2.3 to about 0.001 cubic centimeters;
(c) a second plate which is adjacent to and fixably mounted in relation to the first plate, in which the second plate has a plurality of openings therein; and
(d) a third plate which is adjacent to the second plate and rotatably mounted in relation to the first end of the container, in which the third plate has a plurality of openings therein,
wherein the first plate is moveable between a first position in which the openings in the first plate are not in registry with the openings in the second plate, and a second position in which the openings in the first plate are in registry with the openings in the second plate, and the third plate is moveable between a first position in which the openings in the second plate are not in registry with the openings in the third plate, and a second position in which the openings in the second plate are in registry with the openings in the third plate.

A method of using the above-described apparatus comprises, consists of, and/or consists essentially of:
(a) providing an apparatus comprising:
   (i) a container having a first end and a second end,
   (ii) a first plate which is rotatably mounted to the first end of the container, in which the first plate has a plurality of openings therein, and the total volume of the sum of the openings of the first plate is in the range of about about 2.3 to about 0.001 cubic centimeters,
   (iii) a second plate which is adjacent to and fixably mounted in relation to the first plate, in which the second plate has a plurality of openings therein, and
   (iv) a third plate which is adjacent to the second plate and rotatably mounted in relation to the first end of the container, in which the third plate has a plurality of openings therein,
   wherein the first plate is moveable between a first position in which the openings in the first plate are not in registry with the openings in the second plate, and a second position in which the openings in the first plate are in registry with the openings in the second plate, and the third plate is moveable between a first position in which the openings in the second plate are not in registry with the openings in the third plate, and a second position in which the openings in the second plate are in registry with the openings in the third plate;
(b) providing the powdered material into the container when the first plate is in the first position to fill the openings in the first plate with the powdered material;
(c) moving the first plate to the second position to transfer the powdered material from the openings in the first plate to the openings in the second plate; and
(d) moving the first plate back to the first position; and
(e) moving the third plate from the first position to the second position to transfer the powdered material from the openings in the second plate through the openings in the third plate to dispense the powdered material.

### BRIEF DESCRIPTION OF THE DRAWINGS

Figure 1A depicts an exploded view of one embodiment of the apparatus of this invention.

Figure 1B depicts a cross-sectional of the embodiment of the apparatus of this invention as depicted in Figure 1A.

Figure 2 depicts a cross-sectional view of an alternative embodiment of the rotating plate of Figures 1A and 1B.

Figures 3A-3C depict a method of operation of the apparatus of this invention depicted in Figures 1A and 1B.

Figure 4 depicts another alternative embodiment of the apparatus of this invention.

Figure 5 depicts another alternative embodiment of the apparatus of this invention.

Figures 6A-6D depict a method of operation of the apparatus of this invention as depicted in Figure 5.

Figure 7 depicts an alternative embodiment of the apparatus of this invention as depicted in Figure 5.

### DETAILED DESCRIPTION OF THE INVENTION

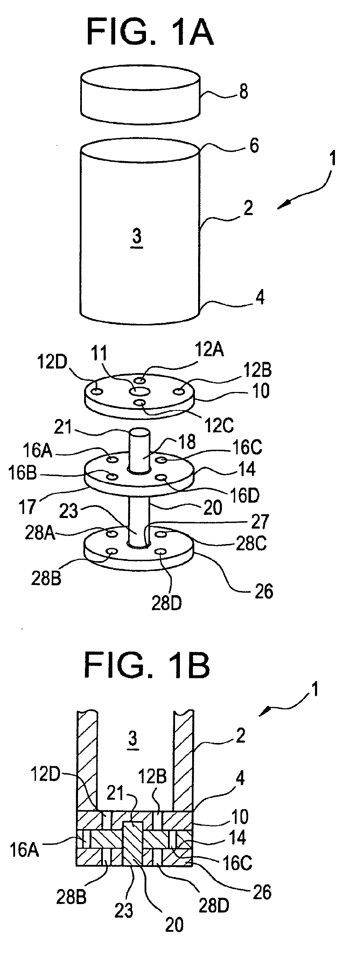

The apparatus of this invention is described in greater detail herein relative to non-limiting embodiments of the invention and with reference to the drawings. Figures 1A and 1B depict exploded and cross-sectional views of one embodiment of the apparatus of this invention. As shown therein, apparatus 1 includes container 2 having a first end 4 and a second end 6. Second end 6 may optionally be externally or internally threaded (not shown in Figures 1A and 1B) to receive optional cap 8. Container 2 has an open portion 3 capable of receiving and holding the granulated or powdered material. Cap 8 may be removed from end 6 to permit refilling of container 2 with the powdered or granulated material to be dispersed.

Plate 10 has openings 12A, 12B, 12C and 12D therein and is fixably mounted to first end 4. Plate 10 may optionally be capable of removal or disassembly from end 4. For example, plate 10 may be sealed to first end 4 using a pressure seal, such as an o-ring or gasket made of a suitable material, such as a food grade rubber, as will be well understood by those skilled in the art. In such an embodiment, plate 10 may be removably affixed to end 4 via set screws or the like (not shown in Figures 1A and 1B). In another embodiment, plate 10 may be permanently affixed to end 4 via welding or the like. Plate 10 has a central cavity or receiving portion 11 capable of receiving first end 21 of shaft 20. In one embodiment, first end 21 of shaft 20 is welded or otherwise permanently affixed to plate 10. Alternatively, plate 10 may be removably secured to first end 21 of shaft 20 using well known techniques such as bushings, bearings or the like (not shown in Figures 1A and 1B).

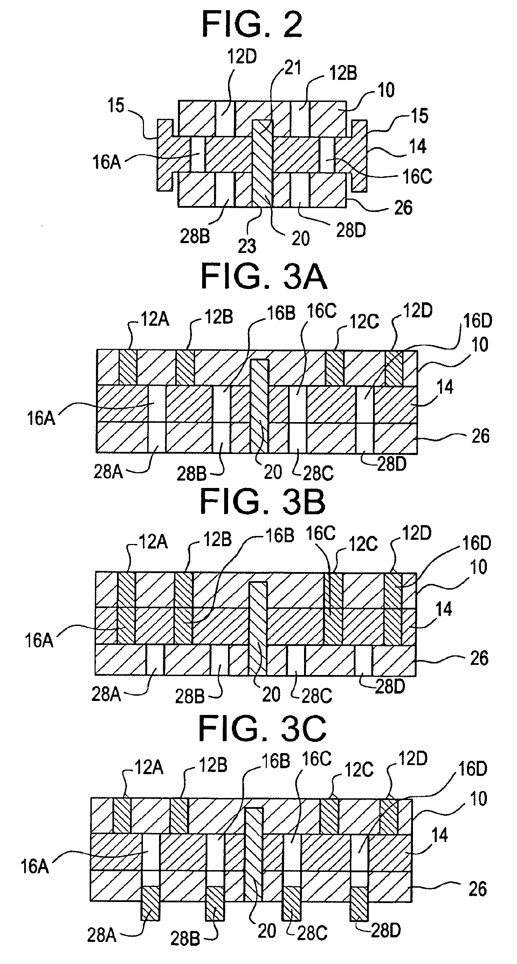

Plate 14 has openings 16A, 16B, 16C and 16D therein and is located adjacent to and is rotatable in relation to plate 10. Plate 14 has a central opening 18 capable of receiving shaft 20 to enable such rotatable movement of plate 14 about shaft 20 using a bushing, bearing or other suitable means (not shown). Plate 14 may optionally have its outer circumference 17 roughened or textured to permit easier rotation of plate 14 by the user. In an alternative embodiment, as depicted in Figure 2, a projection member 15 may be affixed to the circumference 17 of plate 14 to permit easier rotation of plate 14 by the user. The outer surface 19 of projection member 15 may also be textured or roughened to permit easier rotation of plate 14 by the user.

Plate 26 is adjacent to plate 14 and is fixably mounted in relation to first end 4 of container 2. Plate 26 has openings 28A, 28B, 28C, and 28D therein. Plate 26 may also have a central cavity or receiving portion 27, which is capable of receiving second end 23 of shaft 20. Plate 26 may be rigidly affixed to second end 23 of shaft 20 via welding or the like, or may be removably secured to second end 23 of shaft 20 using well known techniques such as bushings, bearings or the like (not shown in Figures 1 and 2).

Openings 12A-12D, 16A-16D, and 28A-28D may be of equal size, unequal in size, or mixtures of equal and unequal size. In a particularly preferred embodiment, openings 12A-12D, 16A-16D, and 28A-28D are circular in shape and of equal volume, and are sized for volumetric delivery of the powdered or granular material contained within container 2, as is described in more detail below. Openings 12A-12D, 16A-16D, and 28A-28D in plate 10 are precisely sized to contain small amounts or volumes of the granulated or powdered material. The total volume of the sum of the openings in plate 10 is in the range of 2.3 to 0.001 cubic centimeters; preferably 0.57 ― 0.003 cubic centimeters_, most preferably about 0.16 ― 0.003_cubic centimeters_. Plates 14 and 26 may be similarly sized. It will be understood by those skilled in the art that a greater or lesser number of openings may be provided in each plate. Only two of the four openings in plates 10, 14, and 26 depicted in Figure 1A are shown in Figure 1B.

Figures 3A-3C depict a preferred embodiment of the method of operation of apparatus 1 to achieve delivery of pre-calibrated amounts of the powdered or granulated material, such as, high intensity sweetener, from container 2 into a food or beverage composition. In Figures 3A-3C, container 2 (not shown) contains, for example, powdered sucralose. While any powdered material or granular material can be used in the apparatus and method of the present invention, specific examples include a high intensity sweetener, a flavor, a nutritional supplement, a vitamin, a mineral, a food grade bulking material, or mixtures thereof. High intensity sweeteners, include, but are not limited to, sucralose, aspartame, neotame, alitame, asulfame, stevia, a sweet protein, a sweet plant extract, or mixtures thereof

Plate 10 having openings 12A, 12B, 12C and 12D is fixably mounted to end 4 of container 2, and plate 26 having openings 28A, 28B, 28C and 28D is also fixably mounted to end 4 of container 2 via shaft 20. Plate 14 having openings 16A, 16B, 16C and 16D is rotatable with respect to plates 10 and 26, and plate 14 is located between plates 10 and 26. When plate 14 is in a first position (Figure 3A), openings 16A, 16B, 16C and 16D are in registry with openings 28A, 28B, 28C and 28D; however, openings 12A, 12B, 12C and 12D are not in registry with openings 16A, 16B, 16C and 16D, and the powdered sucralose remains within openings 12A, 12B, 12C and 12D. Upon rotation of plate 14 to a second position (Figure 3B), openings 12A, 12B, 12C and 12D are in registry with openings 16A, 16B, 16C and 16D, and the powdered sucralose is dispensed from container 2 and fills openings 16A, 16B, 16C and 16D as well as openings 12A, 12B, 12C and 12D. When plate 14 is rotated back to its initial position (Figure 3C), openings 16A, 16B, 16C and 16D are again in registry with openings 28A, 28B, 28C and 28D; and the powdered sucralose is discharged by gravity into the beverage or food located below plate 26. Openings 12A, 12B, 12C and 12D contain additional powdered sucralose, and the cycle may be repeated if additional sweetening is required. In an embodiment of the present invention, several cycles of filling and discharging are used to dispense the desired amount of powdered sucralose. For example, one complete revolution of the device shown in figures 3 A-C would open provide 4 cycles of fill and discharge. The combination of a plurality or holes and a plurality of cycles improves the overall precision of dispensing.

It should be noted at while the figures show an embodiment show 4 openings or holes, such figures are not intended to be limiting to the invention. Any number of openings or holes can be used based upon the requirements by the needed precision in dosing.

In the table below the total volume in the holes to deliver various quantities of sugar equivalents is listed

| Case | Grams Sucrose | Equivalent Grams Sucralose | Dilution Factor | Total Grams | Holes Droped per Dose | Total Hole Volume per Drop (Cubic Centimeters) |
|---|---|---|---|---|---|---|
| 1 cup | 227 | 0.454 | 1 | | 1 | 0.64857143 |
| 1 cup | 227 | 0.454 | 1 | | 4 | 40.16214286 |
| 1 cup | 227 | 0.454 | 1 | | 10 | 0.06485714 |
| 1 tsp | 4 | 0.008 | 1 | | 1 | 0.01142857 |
| 1 tsp | 4 | 0.008 | 1 | | 4 | 0.00285714 |
| 1 tsp | 4 | 0.008 | 1 | | 10 | 0.00114286 |
| 1 tsp | 4 | 0.008 | 10 | | 1 | 0.11428571 |
| 1 tsp | 4 | 0.008 | 10 | | 4 | 0.02857143 |
| 1 tsp | 4 | 0.008 | 10 | | 10 | 10.01142857 |
| 1 tsp | 4 | 0.008 | 100 | | 1 | 1.14285714 |
| 1 tsp | 4 | 0.008 | 100 | | 4 | 0.28571429 |
| 1 tsp | 4 | 0.008 | 100 | | 10 | 0.11428571 |
| 2 tsp | 8 | 0.016 | 1 | | 1 | 0.02285714 |
| 2 tsp | 8 | 0.016 | 1 | | 4 | 0.00571429 |
| 2 tsp | 8 | 0.016 | 1 | | 10 | 0.00228571 |
| 2 tsp | 8 | 0.016 | 10 | | 1 | 0.22857143 |
| 2 tsp | 8 | 0.016 | 10 | | 4 | 0.05714286 |
| 2 tsp | 8 | 0.016 | 10 | | 10 | 0.02285714 |
| 2 tsp | 8 | 0.016 | 100 | | 1 | 2.28571429 |
| 2 tsp | 8 | 0.016 | 100 | | 4 | 0.57142857 |
| 2 tsp | 8 | 0.016 | 100 | | 10 | 0.22857143 |

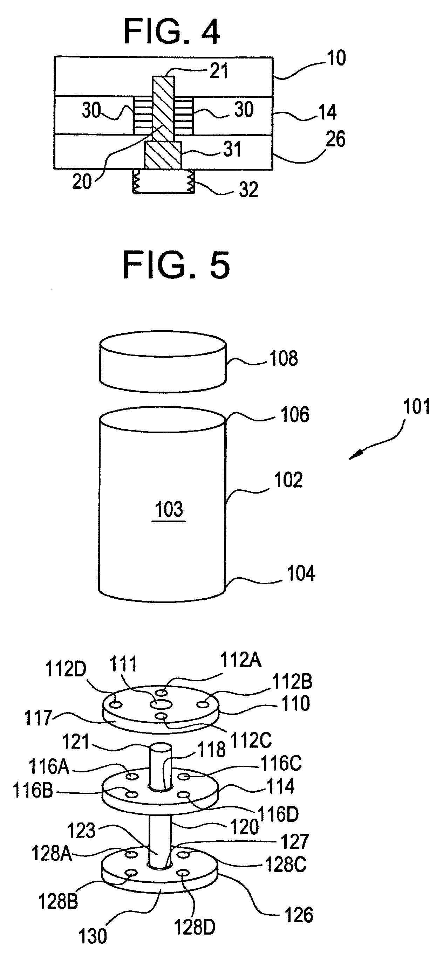

Figure 4 depicts an alternative arrangement which allows for removal of plates 14 and 26 from the apparatus for cleaning and the like. In Figure 4, which depicts the lower end of apparatus 1, plate 10 is affixed to lower end 4 of container 2. First end 21 of shaft 20 is affixed to plate 10, and plate 14 is rotatably mounted about shaft 20 via bushing 30. Second end 23 of shaft 20 has a square shaped portion 31, and in this embodiment aperture 27 of plate 26 is square-shaped to mate with the exterior of square shaped portion 31 of shaft 20. Second end 23 of shaft 20 is externally threaded as shown and is removably attached to plate 26 by lock nut 32, which holds plate 26 in position. Bushing 30 enables plate 14 to be slidably removed from shaft 20. The openings in plates 10, 14 and 26 are not shown in Figure 4.

Figure 5 depicts a cross-sectional view of another embodiment of the apparatus of this invention. As shown therein, apparatus 101 comprises a container 102 has a first end 104 and a second end 106. Second end 106 may optionally be externally or internally threaded (not shown in Figure 5) to receive optional cap 108 (not shown in Figure 5). Container 102 has an open portion 103 capable of receiving and holding the granulated or powdered material. Cap 108 may be removed from end 106 to permit refilling of container 102 with the powdered or granulated material to be dispersed.

Plate 110 has openings 112A, 112B, 112C and 112D therein and is rotatably mounted to first end 104 via shaft 120. Rotation or movement of a plate or plates between various positions enables the user to deliver a precisely controlled volume of powdered material into the food or beverage from the container. In alternative embodiment, Plate 110 is moveably mounted to first end 104. Plate 110 may optionally be capable of removal or disassembly from end 104. In such an embodiment, plate 110 may be removably affixed to shaft 120 via a slidable bushing or bearing or the like (not shown in Figure 5). Plate 110 has a central cavity or receiving portion 111 capable of receiving first end 121 of shaft 120. In one embodiment, plate 110 may be removably secured to first end 121 of shaft 120 using well known techniques such as bushings, bearings or the like (not shown in Figure 5).

Plate 114 has openings 116A, 116B, 116C and 116D therein and is located adjacent to and is fixably mounted in relation to plate 110. Plate 114 may be fixably mounted to end 104 of container 102 by welding, use of a keyed configuration, use of a tongue and groove joint, or by other suitable means. Plate 114 has a central opening 118 capable of receiving shaft 120 to enable shaft 120 to pass through plate 114. A bushing, bearing or other suitable means (not shown in Figure 5) may also be employed to accomplish this.

Plate 126 is adjacent to plate 114 and is rotatably mounted in relation to plate 114 and end 104 of container 102. Plate 126 has openings 128A, 128B, 128C and 128D therein. Plate 126 may also have a central cavity or receiving portion 127 capable of receiving second end 123 of shaft 120. In one embodiment, plate 126 may be removably secured to second end 123 of shaft 120 using well known techniques such as bushings, bearings or the like (not shown in Figure 5). In the embodiment depicted in Figure 5, plate 126 is removably secured to second end 123 of shaft 120 by having second end 123 externally threaded and mated to a locking or retaining nut 140 which mates with second end 123 of shaft 120.

Plates 110 and/or 126 may optionally have respective outer circumferences 117 and 130 roughened or textured (not shown in Figure 5) to permit easier rotation of plates 110 and/or 126 by the user. In an alternative embodiment as previously described with respect to the embodiment of the invention depicted in Figures 1A and 1B, projection members may be affixed to the circumferences 117 and 130 of plates 110 and/or 126 to permit easier rotation of plates 110 and/or 130 by the user. The outer surfaces of these projection members may also be textured or roughened to permit easier rotation of plate 110 and/or 126 by the user.

Openings 112A-112D, 116A-116D, and 128A-128D may be of equal size or may be unequal in size. In a particularly preferred embodiment, openings 112A-112D, 116A-116D and 128A-128D are circular in shape and of equal volume, and are sized for volumetric delivery of the powdered or granular material contained within container 102, as is described in more detail below. The openings in plate 110 are precisely sized to contain small, pre-calibrated amounts of the granulated or powdered material. The volume of the sum of the openings in plate 110 is in the range of about 2.3 to about 0.001 cubic centimeters; preferably about 0.57 to about 0.003 cubic centimeters, most preferably about 0.16 to about 0.003 cubic centimeters. Plates 114 and 126 may be similarly sized. It will be understood by those skilled in the art that a larger or smaller number of openings (although always more than one opening) may be provided in each plate.

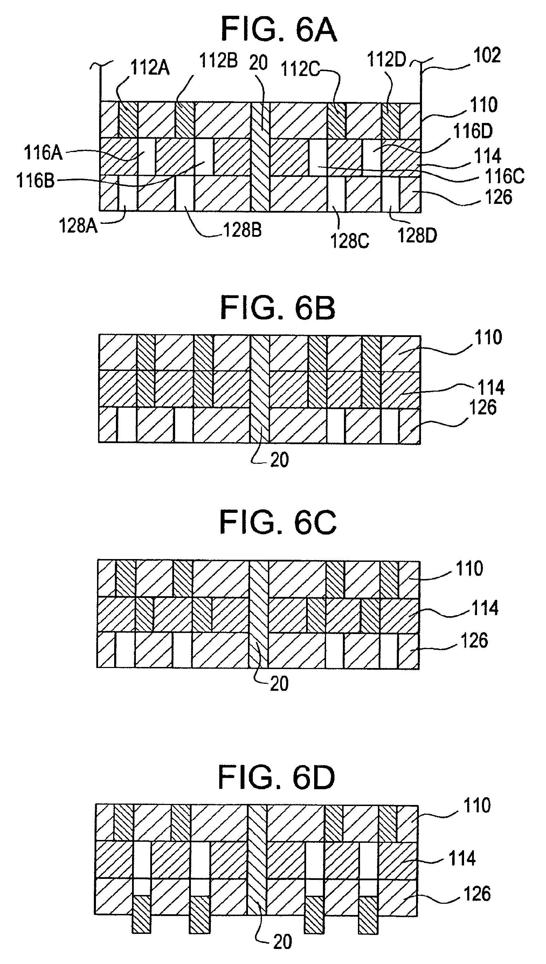

Figures 6A-6D depict a preferred embodiment of the method of operation of apparatus 101 to achieve delivery of small, precise amounts of the powdered or granulated material such as high intensity sweetener from container 102 into a food or beverage composition. In Figure 6A, container 102 (not shown) contains, for example, powdered sucralose. Plate 110 having openings 112A, 112B, 112C and 112D is rotatably mounted to end 104 of container 102 via shaft 120, and plate 126 having openings 128A, 128B, 128C and 128D is also rotatably mounted to end 104 of container 102 via shaft 120. Plate 114 having openings 116A, 116B, 116C and 116D is located between plates 110 and 126, and is fixably mounted with respect to end 104 of container 102 as well as plates 110 and 126. When plate 112 is in a first position (see Figure 6A), openings 112A, 112B, 112C and 112D are not in registry with openings 116A, 116B, 116C and 116D, and plate 126 is in a first position such that openings 116A, 116B, 116C and 116D are not in registry with openings 128A, 128B, 128C and 128D. Thus, the powdered sucralose initially remains within openings 112A, 112B, 112C and 112D.

Upon rotation of plate 112 to a second position (see Figure 6B), openings 112A, 112B, 112C and 112D are in registry with openings 116A, 116B, 116C and 116D, and the powdered sucralose is dispensed from container 102 and fills openings 116A, 116B, 116C and 116D as well as openings 112A, 112B, 112C and 112D. Plate 110 is then rotated back to its initial position (see Figure 6C), plate 126 is then rotated to a second position (see Figure 6D) such that openings 116A, 116B, 116C and 116D are in registry with openings 128A, 128B, 128C and 128D, and the powdered sucralose is discharged by gravity into the beverage or food located below plate 126. Openings 112A, 112B, 112C and 112D contain additional powdered sucralose, and the cycle may be repeated if additional sweetening is required.

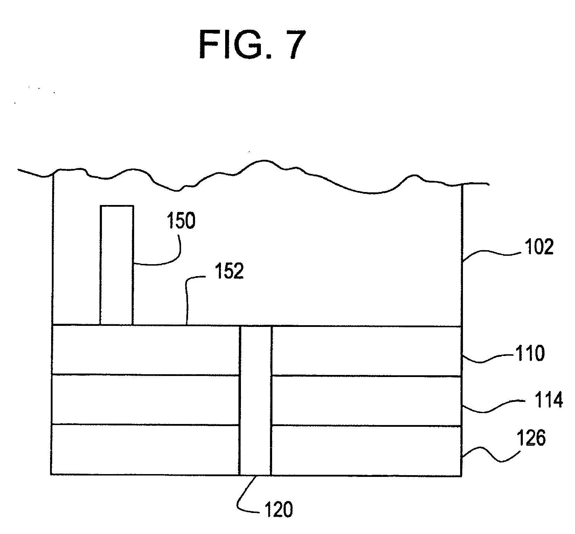

Figure 7 depicts another embodiment of the apparatus of Figure 6. In Figure 7, rotatable plate 110 has attached thereto a member 150 which is affixed to upper surface 152 of plate 110. Accordingly, member 150 rotates within container 102 when plate 110 is rotated. When container 102 contains granulated or powdered material (e.g. sucralose) and plate 110 is rotated, member 150 acts as a "clump breaker" to break up and disperse any aggregated granulated or powdered material via mechanical agitation. Member 150 may be made of a variety of materials such as, for example, __: Member 150 may have various shapes such as rectangular, square, beveled, etc. More than one member 150 may be affixed to rotatable plate 110. Openings 112A-112D, 116A-116D and 128A-128D are not shown in Figure 7.

While the descriptions thus far describing rotating plates sliding plates will can also be used, if the basic concept is followed. That is a plurality of holes are used and in position 1 the middle plate is aligned with the holes connected to the container and in position 2 the holes in the middle plate are aligned with the discharge holes

The apparatus of this invention and its various components may be made from a variety of materials. For example, the container, plates and other components made be made of metals such as stainless steel or aluminum, or plastic.

In a particularly preferred embodiment, the powdered or granulated material employed in the apparatus of this invention is a high intensity sweetener such as those disclosed in U.S. Patent No. 4,435,440. In another embodiment the powdered or granulated material may comprise a mixture of one or more high intensity sweeteners and one or more flavorants. The high intensity sweetener and flavorant may be amalgamated and/or size-modified to assist in consistent delivery of the powdered or granulated material to the food or beverage.

While not wishing to be bound by any one theory, it is believed that the apparatus and method of this invention achieve the dispersal of precise, pre-calibrated small amounts of a high intensity sweetener due to the use of more than one opening or volume in each plate. By using more than one opening in each plate, the error associated with the deviation in volume of each opening is statistically reduced, as will be readily understood by those skilled in the art As a non-limiting example, if the standard deviation for hole filling is about 30% of the mean volume for an individual hole, and a circular plate is turned one full revolution to dispense a dose, an IBM ThinkPad Personal Computer, Model x24, running the Windows 2000 Professional operating system , (Service Pack 2), and Microsoft Office 2000 Excel Spreadsheet software (version 9.0 3824 SR-1) can be used to develop the following table:

| Holes | Holes Droped Per Revelutuion (dose) | Overall Standard Deviation from Mean % of Mean |
|---|---|---|
| 1 | 1 | 30% |
| 2 | 4 | 14% |
| 4 | 16 | 7.3% |
| 8 | 64 | 4.3% |
| 10 | 100 | 3.4% |

Although the invention is illustrated and described above with reference to specific embodiments, the invention is not intended to be limited to the details shown. Rather, various modifications may be made in the details within the scope and range of equivalents of the claims and without departing from the invention. It is expressly intended, for example, that all ranges broadly recited in this document include within their scope all narrower ranges that fall within the broader ranges.

## Claims

1. An apparatus for dispensing powdered material into a food or beverage composition,
wherein the apparatus comprises:
(a) a container having a first end a second end, and an outside therebetween;
(b) a first plate that is mounted to the first end of the container, in which the first plate has a plurality of first plate openings therein, and the total volume of the sum of the first plate openings being in the range of about 2.3 to about 0.001 cubic centimeters;
(c) a second plate that is adjacent to and moveably mounted in relation to the first plate, in which the second plate has a plurality of second plate openings therein; and
(d) a third plate that is adjacent to and moveable mounted in relation to the second plate, in which the third plate has a plurality of third plate openings therein the plurality of third plate openings being in permanent communication to the outside of the container,
wherein the second plate is moveable between at least two positions, (i) a first position in which at least one of the plurality of second plate openings is in registry with at least one of the plurality of the third plate openings and the plurality of second plate openings not being in registry with the any of the plurality of first plate openings, and (ii) a second position wherein at least one of the plurality of second plate openings being in registry with at least one of the plurality of first plate openings and the plurality of second plate openings not being in registry with at least one of the plurality of third plate openings.

2. A method for dispensing powdered material into a food or beverage composition, the method comprising:
(a) providing the apparatus comprising:
(i) a container having a first end a second end, and an outside therebetween;
(ii) a first plate that is mounted to the first end of the container, in which the first plate has a plurality of first plate openings therein, and the total volume of the sum of the first plate openings being in the range of about 2.3 to about 0.001 cubic centimeters;
(iii) a second plate that is adjacent to and moveably mounted in relation to the first plate, in which the second plate has a plurality of second plate openings therein; and
(iv) a third plate that is adjacent to and moveable mounted in relation to the second plate, in which the third plate has a plurality of third plate openings therein the plurality of third plate openings being in permanent communication to the outside of the container,
wherein the second plate is moveable between at least two positions, (i) a first position in which at least one of the plurality of second plate openings is in registry with at least one of the plurality of the third plate openings and the plurality of second plate openings not being in registry with the any of the plurality of first plate openings, and (ii) a second position wherein at least one of the plurality of second plate openings being in registry with at least one of the plurality of first plate openings and the plurality of second plate openings not being in registry with at least one of the plurality of third plate openings;
(b) providing the powdered material into the container when the second plate is in the first position to fill the openings in the first plate with the powdered material;
(c) moving the second plate to the second position to transfer the powdered material from the openings in the first plate to the openings in the second plate; and
(d) moving the second plate to the first position to transfer the powdered material from the openings in the second plate through the openings in the third plate to dispense the powdered material.

3. The apparatus of claim 1, wherein the first plate and the second plate are in fixed alignment with each other.

4. The apparatus and method of claim 1 or claim 2, wherein the first plate is permanently mounted or detachably mounted to the container.

5. The apparatus and method of claim 1 or claim 2, wherein the second plate is mounted to the container.

6. The apparatus and method of claim 5, wherein the second plate is permanently mounted or detachably mounted.

7. The apparatus and method of claim 1 or claim 2, wherein the total volume of the sum of the openings of the first plate is from about 0.57 to about 0.003 cubic centimeters

8. The apparatus and method of claim 7, in which the total volume of the sum of the openings of the first plate is from about 0.16 to about 0.003 cubic centimeters.

9. The apparatus and method of claim 1 and claim 2, wherein the second plate is rotatably mounted upon a shaft passing therethrough.

10. The apparatus and method of claim 1 or claim 2, additionally comprising means for rotating or moving the second plate.

11. The apparatus and method of claim 1 or claim 2, wherein a projection member is affixed to at least a portion of the circumferential surface of the second plate.

12. The apparatus and method of claim 11, wherein at least a portion of the projection member has a textured surface.

13. The apparatus and method of claim 1 or claim 2, wherein the second and third plates are removably interconnected to a shaft having a first end interconnected to a locking nut.

14. The apparatus and method of claim 13, wherein the shaft has a square shaped portion and the third plate has an aperture therein which mates with the square shaped portion of the shaft.

15. The apparatus and method of claim 1 or claim 2, wherein at least a portion of the circumferential surface of the second plate is textured.

16. The apparatus of claim 1, wherein the third plate is movable by rotation or sliding.
